(19) Europäisches Patentamt
European Patent Office
Office européen des brevets

(11) EP 2 522 706 A1

## (12) EUROPEAN PATENT APPLICATION
published in accordance with Art. 153(4) EPC

(43) Date of publication:
14.11.2012 Bulletin 2012/46

(21) Application number: 11731826.1

(22) Date of filing: 06.01.2011

(51) Int Cl.:
C09J 133/06 (2006.01)          C09J 4/00 (2006.01)
C09J 4/02 (2006.01)            C09J 7/00 (2006.01)
C09J 11/06 (2006.01)           C09J 139/00 (2006.01)

(86) International application number:
PCT/JP2011/050132

(87) International publication number:
WO 2011/083828 (14.07.2011 Gazette 2011/28)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 07.01.2010 JP 2010002235

(71) Applicant: Nitto Denko Corporation
Osaka 567-8680 (JP)

(72) Inventors:
• OKAMOTO Masayuki
Osaka (JP)

• NIWA Masahito
Osaka (JP)
• KITANO Chie
Osaka (JP)

(74) Representative: Grünecker, Kinkeldey,
Stockmair & Schwanhäusser
Leopoldstrasse 4
80802 München (DE)

(54) **PRESSURE-SENSITIVE ADHESIVE COMPOSITION AND PRESSURE-SENSITIVE ADHESIVE SHEET**

(57) An object of the present invention is to provide an acrylic pressure-sensitive adhesive composition capable of forming a pressure-sensitive adhesive, which has excellent adhesiveness to an adherend having surface polarity of every kind and can exhibit excellent repulsion resistance even in a moist heat environment, and a pressure-sensitive adhesive sheet using the composition. The pressure-sensitive adhesive composition provided by the present invention contains a copolymerization reaction product of a monomer mixture. The monomer mixture contains an alkyl (meth)acrylate having an alkyl group with a carbon number of from 4 to 20 and N-vinylcaprolactam. The total sum amount thereof is 95% by mass or more of the whole of monomer components. An amount of N-vinylcaprolactam is from 12 to 40% by mass.

EP 2 522 706 A1

**Description**

**TECHNICAL FIELD**

The present invention relates to an acrylic pressure-sensitive adhesive composition and a pressure-sensitive adhesive sheet,

**BACKGROUND ART**

In recent years, pressure-sensitive adhesive sheets have been turned to practical use in various situations such as fixation (joining), conveyance, protection and decoration of goods. Representative examples of such a pressure-sensitive adhesive sheet include those provided with a pressure-sensitive adhesive layer which is formed using an acrylic pressure-sensitive adhesive composition. Typically, such an acrylic pressure-sensitive adhesive composition is constituted such that a pressure-sensitive adhesive layer composed of an acrylic polymer as a base polymer can be formed. As conventional art documents related to the acrylic pressure-sensitive compositions, there are exemplified Patent Documents 1 to 8.

**PRIOR ART DOCUMENTS**

PATENT DOCUMENTS

Patent Document 1: JP-A-5-105856
Patent Document 2: JP-A-5-263055
Patent Document 3: JP-A-6-166858
Patent Document 4: JP-A-6-172729
Patent Document 5: JP-A-6-200225
Patent Document 6: JP-A-6-1954
Patent Document 7: JP-A-6-166857
Patent Document 8: JP-A-2000-96012

**SUMMARY OF THE INVENTION**

PROBLEMS TO BE SOLVED BY THE INVENTION

An adherend of the pressure-sensitive adhesive sheet may be, for example, a material having surface polarity of every kind, such as polypropylene resins and acrylic resins. But, for example, in pressure-sensitive adhesives composed of, as a base polymer, an acrylic polymer containing acrylic acid in a monomer composition thereof, there may be the case where adhesiveness and/or repulsion resistance (characteristics of, when the pressure-sensitive adhesive layer is joined to a curved or uneven surface, withstanding a repulsion of attempting to lift from the joined surface and keeping joining; which may also be grasped as curved surface followability) to an adherend whose surface has low polarity, such as a polypropylene resin are not sufficient. For example, there may be the case where even when sufficient repulsion resistance is exhibited in a room-temperature environment against a member having prescribed surface polarity, the sufficient repulsion resistance is not revealed in a moist heat environment.

An object of the present invention is to provide an acrylic pressure-sensitive adhesive composition capable of forming a pressure-sensitive adhesive layer, which has excellent adhesiveness to an adherend having surface polarity of every kind and can exhibit excellent repulsion resistance even in a moist heat environment. Another object thereof is to provide a pressure-sensitive adhesive sheet comprising such a pressure-sensitive adhesive layer and to provide a laminate in which such a pressure-sensitive adhesive layer is provided on a layer formed of an optical material.

MEANS FOR SOLVING THE PROBLEMS

A pressure-sensitive adhesive composition provided by the present invention comprises at least a copolymerization reaction product of a monomer mixture. The monomer mixture comprises, as a monomer m1, an alkyl (meth) acrylate represented by the following formula (I):

$$CH_2=C(R^1)COOR^2 \qquad (I)$$

wherein $R^1$ is a hydrogen atom or a methyl group; and $R^2$ is an alkyl group having a carbon number of from 4 to 20 (requirement (a)), Further, the composition comprises, as a monomer m2, N-vinylcaprolactam (requirement (b)). A total sum amount of the monomer m1 and the monomer m2 contained in the monomer mixture is 95% by mass or more of the whole of monomer components contained in the monomer mixture (requirement (c)). An amount of the monomer m2 is from 12 to 40% by mass of the whole of monomer components (requirement (d)). That is, an amount of the monomer m1 is from 55 to 88% by mass of the whole of monomer component.

The copolymerization reaction product may be a completely polymerized material or partially polymerized material of the monomer mixture. In the present description, the completely polymerized material means the resultant obtained by substantially completely copolymerizing the monomer mixture (that is, almost the whole of the monomer components). The partially polymerized material means the resultant product obtained by copolymerizing a portion of the quantity of the monomer mixture. Typically, the partially polymerized material may contain a polymer (which may include a polymer having relatively low conversion, and may, for example, include a polymer (which may be referred to as an oligomer) having a weight average molecular weight Mw of about $1 \times 10^4$ or lower) obtained by partially copolymerizing monomers contained in the monomer mixture, and an unreacted monomer. The copolymerization reaction product may contain the other component (polymerization initiator, solvent, dispersant, etc.) used in the copolymerization reaction, in addition to the monomers and/or the copolymer thereof.

Since the pressure-sensitive adhesive composition contains copolymerization reaction product of the monomer mixture containing the monomer m1 and the monomer m2 in a predetermined amount, the composition can form a pressure-sensitive adhesive layer which is excellent in adhesiveness and can exhibit excellent repulsion resistance not only in a thermoneutral environment (room temperature, RH 50% or so, etc.) but also in a moist heat environment, with respect to a low-polarity surface. The pressure-sensitive adhesive layer can be formed by, for example, applying (coating) the pressure-sensitive adhesive composition on a substrate, and curing it, if necessary, after providing an appropriate processing treatment.

In one preferred embodiment, the pressure-sensitive adhesive composition contains the partial polymerized material as the copolymerization reaction product. The pressure-sensitive adhesive composition further contains a photopolymerization initiator, and contains substantially no solvent. Such pressure-sensitive adhesive composition may have a viscosity capable of coating without any treatments. Since the pressure-sensitive adhesive composition contains photopolymerization initiator and therefore is photocurable, it can easily form a pressure-sensitive adhesive layer through a simple and easy curing treatment such as light (typically, UV) irradiation, after coated on a substrate or the like. Incidentally, the solvent used herein means a compound that does not have copolymerizability with respect to the above monomer components and used mainly for the purpose of diluting the copolymerization reaction product. That is, a monomer component (unreacted monomer) that can function as a solvent is not included in the concept of the solvent used herein. Additionally, the phrase "containing substantially no solvent" means that the pressure-sensitive adhesive composition does not contain a solvent at all or that the content thereof is 0.1% by mass or lower in the pressure-sensitive adhesive composition.

In another preferred embodiment, the pressure-sensitive adhesive composition further contains a crosslinking agent. Such pressure-sensitive adhesive composition can form a pressure-sensitive adhesive (which may be a pressure-sensitive adhesive layer of a pressure-sensitive adhesive sheet, the same shall apply hereinafter) that can exhibit more excellent adhesiveness and repulsion resistance with respect to a low-polarity surface.

The monomer mixture preferably has a monomer composition such that a glass transition temperature Tg of a copolymer to be formed of the mixture (that is, a copolymer having a copolymer composition same as the monomer composition of the mixture) is - 10°C or lower (typically, about from -70°C to 10°C). As the Tg of a copolymer, value calculated in accordance with the Fox equation using a mass fraction and Tg (Kelvin: K) as a homopolymer of each monomer component (m1, m2, etc.) is employed. Such pressure-sensitive adhesive composition can form a pressure-sensitive adhesive layer more excellent in balance among adhesive performances.

In further another preferred embodiment, the monomer mixture further contains, as a monomer m3, a nitrogen-containing monomer other than N-vinylcaprolactam.

As another aspect, the present invention provides a pressure-sensitive adhesive sheet comprises a pressure-sensitive adhesive layer formed of any of the pressure-sensitive adhesive compositions disclosed herein. The pressure-sensitive adhesive sheet may exhibit excellent adhesiveness with respect to a member having a surface polarity of every kind and exhibit excellent repelling resistance even in a moist heat environment.

As described above, the pressure-sensitive adhesive formed of the pressure-sensitive adhesive composition disclosed herein exhibits excellent adhesiveness even with respect to a low-polarity surface, and therefore, is suitable for, for example, the use as bonding an optical member having a low-polarity base surface (joining surface) with a liquid crystal cell or the like. Accordingly, the present invention further provide a laminate comprising an optical member and, as a pressure-sensitive adhesive layer laminated thereon, a cured layer of any of the pressure-sensitive adhesive compositions disclosed herein. The optical member has a low-polarity surface at least on the side coming into contact with the pressure-sensitive adhesive layer. The optical member described herein means a member having a predetermined light transmission. The optical member may be a single layer structure composed of an identical material or may be a multilayer structure containing plural materials, Typically, it means various optical films such as polarizing film, phase difference film, and laminates thereof.

As further another aspect, the present invention provides a method for manufacturing a pressure-sensitive adhesive sheet. The method comprises the following steps:

(A) subjecting a monomer mixture to a copolymerization reaction to prepare a pressure-sensitive adhesive composition;
(B) coating the pressure-sensitive adhesive composition on a base material; and
(C) subjecting the coated composition to a curing treatment to form a pressure-sensitive adhesive layer.

The monomer mixture comprises, as a monomer m1, an alkyl (meth)acrylate represented by the following formula (I): $CH_2=C(R^1)COOR^2$(I) (wherein $R^1$ is a hydrogen atom or a methyl group; and $R^2$ is an alkyl group having a carbon number of from 4 to 20). The mixture further comprises, as a monomer m2, N-vinylcaprolactam. A total sum amount of the monomer m1 and m2 is 95% by mass or more of the whole of monomer components. And simultaneously, an amount of the monomer m2 falls within the range of from 12 to 40% by mass of the whole of monomer components.

In the above step (A), the copolymerization reaction may be performed only in initial phase (that is, performed partially) at which a large amount of unreacted monomers remain or may be performed till the final phase (that is, performed almost completely) at which little unreacted monomers remain. A solvent may be removed or added, and a crosslinking agent may be added, as needed. In the above step (C), the curing treatment after coating the composition may be drying (heating), crosslinking, additional copolymerization reaction, aging or the like. The curing treatment may be one kind thereof or may be two or more kinds thereof. Two or more kinds thereof (e.g., crosslinking and drying) may be performed simultaneously or in multiple stages. For example, a treatment (heat treatment etc.) of simply drying is also included in the curing treatment described here. Such method can effectively produce a pressure-sensitive adhesive sheet that exhibits excellent adhesiveness with respect to a member having surface polarity of every kind and is excellent in repelling resistance in a hoist heat environment.

## BRIEF DESCRIPTION OF THE DRAWINGS

FIG. 1 is a cross-sectional view schematically showing a configuration example of the pressure-sensitive adhesive sheet according to the present invention.
FIG. 2 is a cross-sectional view schematically showing another configuration example of the pressure-sensitive adhesive sheet according to the present invention.
FIG. 3 is a cross-sectional view schematically showing another configuration example of the pressure-sensitive adhesive sheet according to the present invention.
FIG. 4 is a cross-sectional view schematically showing another configuration example of the pressure-sensitive adhesive sheet according to the present invention.
FIG. 5 is a cross-sectional view schematically showing another configuration example of the pressure-sensitive adhesive sheet according to the present invention.
FIG. 6 is a cross-sectional view schematically showing another configuration example of the pressure-sensitive adhesive sheet according to the present invention.

## MODES FOR CARRYING OUT THE INVENTION

Preferred embodiments of the present invention are hereunder described. Incidentally, matters other than those specifically mentioned in the present description, which are necessary for carrying out the present invention, may be grasped as design matters by a person skilled in the art on the basis of conventional technologies in the field concerned. The present invention can be carried out on the basis of the contents disclosed in the present description and technical common knowledge in the field concerned.

Incidentally, in the present description, all percentages and parts expressed by mass are the same as percentages and parts expressed by weight.

The pressure-sensitive adhesive composition disclosed herein contains a copolymerization reaction product of a monomer mixture containing at least a monomer m1 and monomer m2 as essential components.

The monomer m1 is one kind or two or more kinds of alkyl (meth)acrylates ((meth)acrylic acid esters of an alkyl alcohol) represented by the following formula (I). The "(meth)acrylic acid" referred to herein is a concept including acrylic acid and methacrylic acid.
$$CH_2=C(R^1)COOR^2 \qquad (I)$$

Here, $R^1$ in the formula (I) is a hydrogen atom or a methyl group. Also, $R^2$ in the formula (I) is an alkyl group having a carbon number of from 4 to 20. The alkyl group may be linear, or may have a branch. Specific examples of the alkyl (meth)acrylate represented by the formula (I) include n-butyl (meth)acrylate, isobutyl (meth)acrylate, sec-butyl (meth)acrylate, t-butyl (meth)acrylate, pentyl (meth)acrylate, isopentyl (meth)acrylate, hexyl (meth)acrylate, heptyl (meth)acrylate, n-octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. Of these, alkyl (meth)acrylates in which $R^2$ is an alkyl group having a carbon number of from 4 to 14 (such a carbon number range will be hereinafter also referred to as "$C_{4-14}$") are preferable, and alkyl (meth)acrylates in which $R^2$ is a $C_{4-10}$ alkyl group (e.g., an n-butyl group or a 2-ethylhexyl group) are more preferable.

In one preferred embodiment, about 70 % by mass or more, and more preferably about 90 % by mass or more of a total amount of the monomer m1 is an alkyl (meth)acrylate in which $R^2$ in the foregoing formula (I) is $C_{4-10}$ (more preferably $C_{4-8}$), Substantially the entirety of the monomer m1 may be a $C_{4-10}$ alkyl (more preferably $C_{4-8}$ alkyl) (meth) methacrylate. The foregoing monomer mixture may be, for example, as the monomer m1, a composition containing butyl acrylate (BA) alone; a composition containing 2-ethylhexyl acrylate (2EHA) alone; or a composition containing two kinds of BA and 2EHA.

An amount of the monomer m1 (in the case where two or more kinds of alkyl (meth)acrylates are contained, a total sum amount thereof) contained in the foregoing monomer mixture may be properly selected depending on an amount of the monomer m2 described later such that a total sum amount of the monomer m1 and the monomer m2 is 95% by mass or more of the whole of monomer components. That is, a content of the monomer m1 is from about 55 % by mass to 88 % by mass, and preferably from about 60 to 86 % by mass of the whole of monomer components. When the content of the monomer m1 is too smaller than the above range, there may be the case where desired adhesive performances are not realized. When it is too larger than the above range, since the amount of the monomer m2 which may be contained in the foregoing monomer mixture is small, there may be the case where sufficient repulsion resistance is hardly realized. Incidentally, the composition (monomer composition) of the foregoing monomer mixture is typically generally corresponding to a copolymerization proportion (copolymerization composition) of the copolymer obtained by copolymerizing the mixture.

The foregoing monomer mixture contains, in addition to the monomer m1, N-vinylcaprolactam (NVC) as the monomer m2. NVC can function as a component which contributes to an improvement of cohesiveness of the pressure-sensitive adhesive due to an intermolecular interaction thereof. An amount of the monomer m2 contained in the foregoing monomer mixture is from about 12 to 40 % by mass, and preferably from 14 to 35 % by mass of the whole of monomer components. When the amount of the monomer m2 is too small, there may be the case where the repulsion resistance is apt to be insufficient. When the amount of the monomer m2 is too large, there may be the case where tackiness is reduced, or adhesive characteristics in a low-temperature environment are impaired.

The foregoing monomer mixture may contain a monomer m3 as an optional component. The monomer m3 may be one kind or two or more kinds of unsaturated monomers which are not corresponding to the monomer m1 and the monomer m2. The unsaturated monomer referred to herein means a monomer having an ethylenically unsaturated group such as a vinyl group, an allyl group and a (meth)acryloyl group.

As the monomer m3, for example, use can be made of an N-containing monomer other than NVC. Specific examples thereof include N-vinyl cyclic amides such as N-vinyl-2-pyrrolidone, N-vinyl-2-piperidone and N-vinyl-3-morpholinone; (meth)acrylamide; N-alkyl (meth)acrylamides such as N-ethyl (meth)acrylamide, N-n-butyl (meth)acrylamide and N-octyl (meth)acrylamide; N,N-dialkyl (meth)acrylamides such as N,N-dimethyl (meth)acrylamide, N,N-diethyl (meth) acrylamide, N,N-dipropyl (meth)acrylamide, N,N-diisopropyl (meth)acrylamide, N,N-di(n-butyl) (meth)acrylamide, and N,N-di(t-butyl) (meth)acrylamide; aminoalkyl group-containing (meth)acrylamides such as dimethylaminoethyl (meth) acrylamide and diethylaminoethyl (meth)acrylamide; N-acryloyl group-containing cyclic monomers such as N-(meth) acryloyl morpholine, N-(meth)acryloyl pyrrolidone and N-(meth)acryloyl pyrrolidine; amino group-containing (meth)acrylates such as aminoethyl (meth)acrylate, N,N-dimethylaminoethyl (meth)acrylate and N,N-dimethylaminopropyl (meth) acrylate; and cyanoacrylates such as acrylonitrile and methacrylonitrile,

Examples of other N-containing monomer include imide group-containing monomers, for example, maleimide monomers such as N-cyclohexylmaleimide and N-phenylmaleimide; itaconimide monomers such as N-methyl itaconimide, N-ethyl itaconimide, N-butyl itaconimide, N-2-ethylhexyl itaconimide, N-lauryl itaconimide, and N-cyclohexyl itaconimide; and succinimide monomers such as N-(meth)acryloxy methylene succinimide, N-(meth)acryloyl-6-oxyhexamethylene succinimide and N-(meth)acryloyl-8-oxyhexamethylene succinimide.

The N-containing monomer is especially preferably N-vinyl-2-pyrrolidone.

Other examples of the monomer m3 include various (meth)acrylates, for example, alkyl (meth)acrylates in which $R^2$ in the foregoing formula (I) is an alkyl group having a carbon number of from 1 to 3 or 21 or more (the alkyl group may be alicyclic); (meth)acrylates having an aromatic hydrocarbon group such as phenyl (meth)acrylate and benzyl (meth)acrylate; and hydroxyl group-containing (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, 6-hydroxyhexyl (meth)acrylate, 8-hyroxyoctyl (meth)acrylate, 10-hydroxydecyl (meth)acrylate, 12-hydroxylauryl (meth)acrylate, and [4-(hydroxymethyl)cyclohexyl] methyl acrylate.

Still other examples of the monomer m3 include carboxyl group-containing monomers, for example, vinyl ester monomers such as vinyl acetate and vinyl propionate; ethylenically unsaturated monocarboxylic acids such as acrylic acid, methacrylic acid and crotonic acid; and ethylenically unsaturated carboxylic acid anhydrides such as maleic anhydride and itaconic anhydride.

A content of the monomer m3 (in the case where two or more kinds thereof are contained, a total sum amount thereof) is suitably set to not more than about 5 % by mass of the whole of monomer components. Alternatively, a monomer mixture containing substantially no monomer m3 may be used. When the content of the monomer m3 is too large, there may be the case where desired pressure-sensitive adhesive performances (e.g., adhesiveness and repulsion resistance to a low-polarity surfaces) are not realized.

In one preferred embodiment, a use amount of the carboxyl group-containing monomer among these monomers m3 is set to not more than 0.5 % by mass. Alternatively, the monomer mixture may be a composition containing substantially no carboxyl group-containing monomer. In the pressure-sensitive adhesive composition disclosed herein, even when an ethylenically unsaturated carboxylic acid such as acrylic acid and methacrylic acid is not used, sufficient cohesiveness is achieved by using the monomer m2. What the use of an ethylenically unsaturated carboxylic can be omitted in this way is advantageous from the viewpoint of enhancing pressure-sensitive adhesive characteristics to a low-polarity surface. Also, such is preferable from the viewpoint of reducing metal corrosion.

The monomer mixture in the technologies disclosed herein preferably has a monomer composition such that, with respect to a copolymer having a copolymerization composition same as the monomer composition of the mixture, Tg (theoretical value) calculated in accordance with the Fox equation on the basis of a mass fraction and Tg (Kelvin: K) as a homopolymer of each monomer is about -10°C or lower (typically from about -70°C to -10°C), and more preferably, has a monomer composition such that Tg is about -20°C or lower (typically from about -70°C to -20°C). The monomer composition (types and mass fractions of the monomer m1, the monomer m2, and the monomer m3) may be adjusted such that Tg falls within the above range. Tg values of various homopolymers are described in, for example, Nenchaku Gijutsu Handobukku (Handbook of Pressure Sensitive Adhesive Technology), published by The Nikkan Kogyo Shimbun, Ltd.; and Polymer Handbook, published by Wiley-Interscience. In the present description, as the Tg of a homopolymer formed of a monomer exemplified below, the following values are adopted, respectively.

| | |
|---|---|
| 2-Ethylhexyl acrylate (2EHA): | -70°C |
| n-Butyl acrylate (BA): | -54°C |
| N-Vinylcaprolactam (NVC): | 176°C |
| N-Vinyl-2-pyrrolidone (NVP): | 54°C |
| Diethyl acrylamide (DEAA): | 81°C |
| Acrylic acid (AA): | 106°C |

The pressure-sensitive adhesive composition disclosed herein contains at least one copolymerization reaction product of a monomer mixture. Alternatively, the pressure-sensitive adhesive composition may contain two or more kinds of copolymerization reaction products having a different monomer composition from each other. In the case of containing two or more kinds of copolymerization reaction products, the monomer composition of a mixture combining all of these copolymerization reaction products must satisfy the foregoing requirements (a) to (d); but the monomer composition of each of the copolymerization reaction products may satisfy or may not satisfy the foregoing requirements (a) to (d). Typically, at least one copolymerization reaction product satisfies the foregoing requirements (a) to (d). Each of two or more copolymerization reaction products may have a monomer composition satisfying the foregoing requirements (a) to (d). In the case where the pressure-sensitive adhesive composition contains a copolymerization reaction product which does not satisfy at least any one of the foregoing requirements (a) to (d), a proportion of such copolymerization reaction product is not more than 60 % by mass of the whole of copolymerization reaction products.

A copolymerization method of the monomer mixture is not particularly limited, and a variety of conventionally known polymerization methods can be properly employed. For example, a polymerization method of performing the polymerization by using a thermal polymerization initiator (thermal polymerization such as solution polymerization, emulsion polymerization and bulk polymerization); photopolymerization of performing the polymerization upon irradiation with light (e.g., ultraviolet rays) in the presence of a photopolymerization initiator; and radiation-induced polymerization of performing the polymerization by inducing radicals, cations, anions, etc. upon irradiation with high energy rays such as radiations (e.g,, $\beta$-rays, $\gamma$-rays) can be properly employed.

The embodiment of polymerization is not particularly limited, and the polymerization can be performed by properly selecting conventionally known monomer supply methods, polymerization conditions (e.g., temperature, time and pressure), and components to be used other than the monomers (e.g., polymerization initiator and surfactant). For example, as the monomer supply method, whole of the monomer mixture may be supplied at once into a reactor (batch supply); the monomer mixture may be supplied by dropping step-by-step (continuous supply); or the monomer mixture may be divided several times, and supplying each quantity at prescribed intervals (divided supply). The monomer mixture may be supplied as a solution obtained by dissolving a part or the whole thereof in a solvent, or a dispersion liquid obtained by emulsifying the mixture into water together with an appropriate emulsifier.

As a polymerization initiator used in performing copolymerization reaction, one kind or two or more kinds of polymerization initiators appropriately selected from conventionally known or used polymerization initiators depending upon the polymerization method can be used. In the thermal polymerization (e.g., solution polymerization or emulsion polymerization), use can be made of, for example, an azo polymerization initiator, a peroxide initiator, a redox initiator which is the combination of peroxide and reductant, or a substituted-ethane initiator. The thermal polymerization can be performed at a temperature of, for example, from about 20°C to 100°C (typically, from 40 to 80°C). In the photopolymerization, various photopolymerization initiator can be used.

Examples of the azo polymerization initiator include 2,2'-azobisisobutyronitrile (AIBN), 2,2'-azobis-2-methylbutyronitrile, 2,2'-azobis(2-methylpropionic acid)dimethyl, 4,4'-azobis-4-cyanovaleric acid, azobisisovaleronitrile, 2,2'-azobis(2-amidinopropane) dihydrochloride, 2,2'-azobis[2-(5-methyl-2-imidazolin-2-yl)propane]dihydrochloride, 2,2'-azobis (2-methylpropionamidine)disulfate, and 2,2'-azobis(N,N'-dimethyleneisobutyl amidine)dihydrochloride.

Examples of the peroxide initiator include persulfates such as potassium persulfate and ammonium persulfate; dibenzoyl peroxide, t-butyl permaleate, t-butyl hydroperoxide, di-t-butyl peroxide, t-butyl peroxybenzoate, dicumyl peroxide, 1,1-bis(t-butyl peroxy)-3,3,5-trimethyl cyclohexane, 1,1-bis(t-butyl peroxy) cyclododecane, and hydrogen peroxide.

Examples of the redox initiator include a combination of a peroxide and ascorbic acid (e.g., combination of hydrogen peroxide water and ascorbic acid), a combination of a peroxide and a ferric salt (e.g., a combination of hydrogen peroxide water and a ferric salt), and a combination of a persulfate and sodium bisulfite.
Examples of the substituted-ethane initiator include a phenyl-substituted ethane,

Examples of the photopolymerization initiator include ketal photopolymerization initiators, acetophenone photopolymerization initiators, benzoin ether photopolymerization initiators, acylphosphineoxide photopolymerization initiators, $\alpha$-ketol photopolymerization initiators, aromatic sulfonyl chloride photopolymerization initiators, photo-active oxime photopolymerization initiators, benzoin photopolymerization initiators, benzyl photopolymerization initiators, benzophenone photopolymerization initiators, and thioxanthone photopolymerization initiators.

Examples of the ketal photopolymerization initiators include 2,2-dimethoxy-1,2-diphenylethane-1-on (e,g., trade name 'IRGACURE 651' manufactured by Ciba Japan K.K.).

Examples of the acetophenone photopolymerization initiators include 1-hydroxycyclohexyl phenylketone (e.g., trade name 'IRGACURE 184' manufactured by Ciba Japan K.K.), 2,2-diethoxyacetophenone, 2,2-dimethoxy-2-phenylacetophenone, 4-phenoxydichloroacetophenone, and 4-(t-butyl)-dichloroacetophenone.
Examples of the benzoin ether photopolymerization initiators include benzoin methylether, benzoin ethylether, benzoin propylether, benzoin isopropylether, and benzoin isobutylether.

As the acylphosphine oxide photopolymerization initiator, use can be made of trade name 'LUCIRIN TPO' manufactured by BASF corporation.
Examples of the $\alpha$-ketol photopolymerization initiators include 2-methyl-2-hydroxypropiophenone and 1-[4-(2-hydroxyethyl)-phenyl]-2- methylpropane-1-on.
Examples of the aromatic sulfonyl chloride photopolymerization initiators include 2-naphthalene sulfonyl chloride.
Examples of the photo-active oxime photopolymerization initiators include 1-phenyl-1,1-propanedione-2-(o-ethoxycarbonyl)-oxime.
Examples of the benzoin photopolymerization initiators include benzoin. Examples of the benzyl photopolymerization initiators include benzyl.

Examples of the benzophenone photopolymerization initiators include benzophenone, benzoyl benzoic acid, 3,3'-dimethyl-4-methoxybenzophenone, polyvinylbenzophenone, and $\alpha$-hydroxycyclohexyl phenyl ketone.
Examples of the thioxanthone photopolymerization initiators include thioxanthone, 2-chlorothioxanthone, 2-methylthioxanthone, 2,4-dimethylthioxanthone, isopropylthioxanthone, 2,4-diisopropylthioxanthone, and dodecylthioxanthone.

The use amount of the polymerization initiator may be the usual use amount, and it can be, for example, selected within the range of from about 0.001 to 5 parts by mass, preferably from about 0.01 to 2 parts by mass, and more preferably from about 0.01 to 1 part by mass, based on 100 parts by mass of the whole of monomer components, When the use amount of the polymerization initiator is too large or too small, there may be the case where desired adhesive performances are hard to be realized.

As the emulsifier (surfactant) which is used for the emulsion polymerization, use can be made of an anionic emulsifier, a nonionic emulsifier, and the like. Examples of the anionic emulsifier include a polyoxyethylene alkyl ether sodium sulfate, a polyoxyethylene alkyl phenyl ether ammonium sulfate, a polyoxyethylene alkyl phenyl ether sodium sulfate, lauryl sodium sulfate, lauryl ammonium sulfate, sodium dodecylbenzenesulfonate, and a polyoxyethylene sodium alkyl sulfosuccinate. Examples of the nonionic surfactant include a polyoxyethylene alkyl ether, a polyoxyethylene alkyl phenyl ether, a polyoxyethylene fatty acid ester, and a polyoxyethylene polyoxypropylene block polymer. Also, use can be made of a radical polymerizable emulsifier (reactive emulsifier) having a structure in which a radical polymerizable group (e.g., a vinyl group, a propenyl group, an isopropenyl group, a vinyl ether group (vinyloxy group), and an allyl ether group (allyoxy group)) is introduced into such anionic or nonionic surfactant. Such emulsifier can be used alone or in combination of two or more kinds thereof. A use amount (on the solid content basis) of the emulsifier may be properly selected, and it can be, for example, from about 0.2 to 10 parts by mass, and preferably from about 0.5 to 5 parts by mass based on 100 parts by mass of the whole of monomer components,

The copolymerization reaction product which is contained in the pressure-sensitive adhesive composition disclosed herein is a resultant obtained by copolymerizing at least a part of the above monomer mixture, and it may be a partially polymerized material or may be a completely polymerized material, That is, the conversion of monomer (monomer conversion) in the copolymerization reaction product is not particularly limited, and the pressure-sensitive adhesive composition may contain an unreacted monomer or may not substantially contain the unreacted monomer. Also, the pressure-sensitive adhesive composition may contain other components which are used for the copolymerization reaction (which may be a polymerization initiator, a solvent, a dispersion medium, or the like). To the pressure-sensitive adhesive composition, in addition to the copolymerization reaction product, other components such as a polymerization initiator, a solvent, or a dispersion medium may be further added, as the need arises.

The conversion of the copolymerization reaction product can be determined in the following method.

[Measurement of conversion]

About 0.5 g of a sample is collected from a copolymerization reaction product, and its mass $W_{p1}$ is precisely weighed. Subsequently, the sample is heated at 130°C for 2 hours to volatilize an unreacted monomer, and a mass $W_{p2}$ of the sample remained after heating is precisely weighed. The conversion is determined by substituting the respective values in the following equation.

$$\text{Conversion (\%)} = (W_{p2}/W_{p1}) \times 100$$

In one embodiment, the copolymerization reaction product may be, for example, a partially polymerized material having a conversion of from about 2 to 40 % by mass, and preferably from about 5 to 25 % by mass, The partially polymerized material may be in a syrup form in which a copolymer formed from a part of the monomer components and an unreacted monomer coexist, The partially polymerized material having such properties is hereinafter sometimes referred to as "monomer syrup". The polymerization method in performing the partial polymerization of the foregoing monomer mixture is not particularly limited, and various polymerization methods as described above may be adopted. The pressure-sensitive adhesive composition of such an embodiment is constituted such that it can form a pressure-sensitive adhesive upon being further cured (polymerized) (typically, the conversion is increased to the same degree as that in the completely polymerized material upon being subjected to a further copolymerization reaction). The polymerization method for curing the composition is not particularly limited, and it may be the same as or different from the polymerization method adopted for the partial polymerization of the monomer mixture (the polymerization method in preparing the foregoing composition). Since the pressure-sensitive adhesive composition of such embodiment has a low conversion and contains an unreacted monomer, even when not diluted with a solvent or a dispersion medium, it may be one having a coatable viscosity. By allowing the pressure-sensitive adhesive composition of such embodiment to have a curable constitution by a polymerization method (e.g., photopolymerization, radiation-induced polymerization, etc.) which does not require a solvent or a dispersion medium, a pressure-sensitive adhesive layer can be formed by coating the composition onto an appropriate base material (which may also be a release liner), followed by a simple and easy curing treatment such as irradiation with light or irradiation with radiations. At that time, an appropriate crosslinking treatment or the like may be applied, as the need arises. When the conversion of the foregoing partially polymerized material is too high, there may be the case where handling properties of the composition are impaired depending upon the form of the pressure-sensitive adhesive composition. For example, when the pressure-sensitive adhesive composition is formed into a solventless type pressure-sensitive adhesive composition, there may be the case when the viscosity is too high, so that coating at ordinary temperatures becomes difficult. On the other hand, when the conversion is too low, characteristics of the pressure-sensitive adhesive obtained by curing the composition become easily instable, and there may be the case where the viscosity of the composition is too low, so that coating becomes difficult.

The solventless type pressure-sensitive adhesive composition can be easily prepared by, for example, partially copolymerizing the monomer mixture by means of photopolymerization, or prepared by means of partial polymerization by a polymerization method other than photopolymerization, Alternatively, a material corresponding to the partially polymerized material obtained by the photopolymerization may be prepared by mixing a copolymer having a relatively low molecular weight obtained by a polymerization method of every kind and an unreacted monomer. From the viewpoints of efficiency and simplicity, it is preferable to perform the partial polymerization of the monomer mixture by means of photopolymerization, According to the photopolymerization, the conversion (monomer conversion) of the partially polymerized material can be easily controlled by changing the irradiation dose of light, whereby the viscosity can be adjusted. Also, in view of the fact that the obtained partially polymerized material already contains a photopolymerization initiator, in further curing the composition to form a pressure-sensitive adhesive, the partially polymerized material has such a constitution that it can be photocurable as is. At that time, a photopolymerization initiator may be supplemented, as the need arises. The photopolymerization initiator to be supplemented may be the same as or different from the photopolymerization initiator used for the partial polymerization. The solventless type pressure-sensitive adhesive composition which is prepared by other method than the photopolymerization can be made photocurable by adding a photopolymerization initiator thereto.

In one preferred embodiment, the pressure-sensitive adhesive composition disclosed herein has a constitution containing a partially polymerized material of the above monomer mixture and one kind or two or more kinds of photopolymerization initiators and substantially not containing a solvent. According to such photocurable solventless type pressure-sensitive adhesive composition, a pressure-sensitive adhesive layer can be easily formed by coating the composition on an appropriate base material (which may also be a release liner) and then curing the coating layer upon irradiation with light. Also, there is also an advantage that a thick pressure-sensitive adhesive layer can be easily formed. Such pressure-sensitive adhesive composition is also preferable from the standpoint of environmental hygiene because it does not use an organic solvent.

A use amount of the photopolymerization initiator is not particularly limited, and for example, a use amount in the above-mentioned general polymerization initiators can be properly adopted. Incidentally, the use amount of the photopolymerization initiator referred to herein means a total amount of the photopolymerization initiators which are used in the manufacturing process of the pressure-sensitive adhesive composition. In consequence, in the pressure-sensitive adhesive composition obtained by supplementing (post-adding) a photopolymerization initiator in the partially polymerized material obtained by photopolymerization, the use amount refers to a total sum amount of the photopolymerization initiator used for the partial polymerization and the supplemented photopolymerization initiator.

In one embodiment, the copolymerization reaction product is a completely polymerized material having a conversion as measured by the above method of about 95 % by mass or more, and preferably about 99 % by mass or more. Such embodiment can be preferably applied to, for example, a pressure-sensitive adhesive composition in a form in which the pressure-sensitive adhesive components are diluted (dissolved or dispersed) with a solvent (e.g., an organic solvent, water, or a mixture thereof) to an appropriate viscosity (e.g., a solvent type (an organic solvent solution form), an aqueous solution form, an emulsion form, etc.). By allowing the pressure-sensitive adhesive composition of such embodiment to constitute a form containing a completely polymerized material, a pressure-sensitive adhesive layer can be formed by coating the composition on an appropriate base material (which may also be a release liner), followed by a simple and easy curing treatment such as drying. At that time, an appropriate crosslinking treatment or the like may be applied, as the need arises.

A solvent type pressure-sensitive adhesive composition can be easily prepared by, for example, subjecting the monomer mixture to solution polymerization. According to the solution polymerization, a completely polymerized material may be efficiently formed. The solvent type pressure-sensitive adhesive composition can also be prepared by dissolving a copolymerization reaction product (typically a material corresponding to the completely polymerized material obtained by the solution polymerization) obtained by a polymerization method other than the solution polymerization in an appropriate organic solvent. From the viewpoint of efficiency, the preparation by means of solution polymerization is preferable.

The pressure-sensitive adhesive composition in an emulsion form can be easily prepared by, for example, subjecting the monomer mixture to emulsion polymerization. According to the emulsion polymerization, a completely polymerized material may be efficiently formed. The pressure-sensitive adhesive composition in an emulsion form can also be prepared by emulsifying a copolymerization reaction product (typically a material corresponding to the completely polymerized material obtained by the emulsion polymerization) obtained by a polymerization method other than emulsion polymerization into an aqueous solvent (typically water) in the presence of an appropriate emulsifier. From the viewpoint of efficiency, the preparation by means of emulsion polymerization is preferable.

In one preferred embodiment, the pressure-sensitive adhesive composition disclosed herein further contains a crosslinking agent. The use of a crosslinking agent enables one to impart appropriate cohesive force and pressure-sensitive adhesive force to a pressure-sensitive adhesive layer to be formed from the composition. As the crosslinking agent, those which are conventionally known in the field of pressure-sensitive adhesives can be properly selected. Use can be made of, for example, polyfunctional (meth)acrylates, isocyanate crosslinking agents, epoxy crosslinking agents, aziridine crosslinking agents, melamine crosslinking agents, metal chelate crosslinking agents, metal salt crosslinking agents, peroxide crosslinking agents, oxazoline crosslinking agents, urea crosslinking agents, amine crosslinking agents, carbodiimide crosslinking agents, and coupling agent crosslinking agents (e.g., silane coupling agents). These may be used alone or in combination of two or more kinds thereof. The crosslinking agent is preferably added after the copolymerization reaction (complete polymerization or partial polymerization) of the above monomer mixture (namely post-added).

An amount of the crosslinking agent to be blended in the pressure-sensitive adhesive composition can be made, for example, from about 0.001 to 5 parts by mass, preferably from about 0.01 to 3 parts by mass, and more preferably from about 0.05 to 0.5 parts by mass based on 100 parts by mass of the whole of monomer components. When the amount of the crosslinking agent is too small, there is a concern that a sufficient crosslinking effect is not exhibited, and the cohesive force (retention characteristic) tends to be lowered. On the other hand, when the amount of the crosslinking agent is too large, there is a concern that an elastic modulus of the pressure-sensitive adhesive after curing becomes too high, so that an adhesive force or tackiness is easily lowered.

In an embodiment in which the copolymerization reaction product is a partially polymerized material (typically an embodiment in which the pressure-sensitive adhesive composition contains the partially polymerized material and the photopolymerization initiator), a polyfunctional (meth)acrylate (namely a monomer having two or more (meth)acryloyl groups in one molecule thereof) can be preferably used as the crosslinking agent. Examples thereof include trimethylolpropane tri(meth)acrylate, pentaerythritol tetra(meth)acrylate, 1,2-ethylene glycol di(meth)acrylate, 1,6-hexanediol di(meth)acrylate, and dipentaerythritol hexaacrylate. From the viewpoints of polymerization reactivity (crosslinking properties) and the like, the use of a polyfunctional acrylate is more preferable. In one preferred embodiment, one kind or two or more kinds (typically one kind) of only polyfunctional (meth)acrylates are used as the crosslinking agent. Alternatively, such polyfunctional (meth)acrylate may be used in combination with other crosslinking agent (e.g., an isocyanate crosslinking agent) within the range where the effects of the present invention are not conspicuously impaired. A use amount of the polyfunctional (meth)acrylate may be properly selected within the above range in such a manner that, for example, in the case of using a bifunctional (meth)acrylate, its use amount is rather large, whereas in the case of using a trifunctional (meth)acrylate, its use amount is rather small.

In an embodiment in which the copolymerization reaction product is a completely polymerized material, an isocyanate crosslinking agent, an epoxy crosslinking agent, and the like can be preferably used. An isocyanate crosslinking agent is especially preferable as the crosslinking agent. In one preferred embodiment, one kind or two or more kinds (typically one kind) of only isocyanate crosslinking agents are used as the crosslinking agent. Alternatively, the isocyanate crosslinking agent may be used in combination with the other crosslinking agent of every kind within the range where the effects of the present invention are not conspicuously impaired.

Examples of the isocyanate crosslinking agent include aliphatic polyisocyanates such as 1,6-hexamethylene diisocyanate, 1,4-tetramethylene diisocyanate, 2-methyl-1,5-pentane diisocyanate, 3-methyl-1,5-pentane diisocyanate, and lysine diisocyanate; alicyclic polyisocyanates such as isophorone diisocyanate, cyclohexyl diisocyanate, hydrogenated tolylene diisocyanate, hydrogenated xylene diisocyanate, hydrogenated diphenylmethane diisocyanate, and hydrogenated tetramethylxylene diisocyanate; aromatic polyisocyanates such as 2,4-tolylene diisocyanate, 2,6-tolylene diisocyanate, 4,4'-diphenylmethane diisocyanate, 2,4'-diphenylmethane diisocyanate, 4,4'-diphenyl ether diisocyanate, 2-nitrodiphenyl-4,4'-diisocyanate, 2,2-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, and 3,3'-dimethoxydiphenyl-4,4'-diisocyanate; and aromatic aliphatic polyisocyanates such as xylylene-1,4-diisocyanate, and xylylene-1,3-diisocyanate.

Dimers or trimers, reaction products, or polymers of such isocyanate compound (e.g., a dimer or a trimer of diphenylmethane diisocyanate, a reaction product between trimethylolpropane and tolylene diisocyanate, a reaction product between trimethylolpropane and hexamethylene diisocyanate, polymethylene polyphenyl isocyanate, polyether polyisocyanate, or polyester polyisocyanate), and the like can also be used. For example, a reaction product between trimethylolpropane and tolylene diisocyanate can be preferably used.

In the pressure-sensitive adhesive layer to be provided in the pressure-sensitive adhesive sheet disclosed herein, it is preferable that a gel fraction fg of the pressure-sensitive adhesive is, for example, from about 20 to 90 %. Conditions such as a monomer composition, a conversion of the monomer components in the pressure-sensitive adhesive composition, a molecular weight of the copolymer to be formed, a forming condition of the pressure-sensitive adhesive layer (e.g., a drying condition, a light irradiation condition), and kind and use amount of the crosslinking agent may be properly set up such that a pressure-sensitive adhesive having such a gel fraction (in the composition containing a crosslinking agent, a pressure-sensitive adhesive after the crosslinking) is formed. When the gel fraction of the pressure-sensitive adhesive is too low, the cohesive force is apt to be insufficient. On the other hand, when the gel fraction is too high, there is a concern that the cohesive force or tackiness is easily lowered. According to a pressure-sensitive adhesive having a gel fraction falling within the range of from about 35 to 75 %, a more favorable pressure-sensitive performance may be realized.

The "gel fraction fg of the pressure-sensitive adhesive" referred to herein means a value measured by the following method. The gel fraction may be grasped by a mass proportion of an ethyl acetate-insoluble matter in the pressure-sensitive agent.

[Measurement method of gel fraction]

A pressure-sensitive adhesive sample (mass $W_{g1}$) is enclosed in a saccate form with a porous polytetrafluoroethylene film (mass $W_{g2}$) having an average pore size of 0.2 $\mu$m, and the opening is tied using a kite string (mass $W_{g3}$). This package is immersed in 50 mL of ethyl acetate and maintained at room temperature (typically 23°C) for 7 days to elute only a sol component in the pressure-sensitive adhesive layer out of the film; the package is then taken out; the ethyl acetate attached onto the outer surface is wiped off; the package is dried at 130°C for 2 hours; and a mass $W_{g4}$ of the resulting package is measured. The gel fraction of the pressure-sensitive adhesive is determined by substituting the respective values into the following expression.

$$fg\ (\%) = [(W_{g4} - W_{g2} - W_{g3})/W_{g1}] \times 100\ \%$$

Incidentally, as the porous polytetrafluoroethylene (PTFE) film, it is desirable to use a trade name "NITOFURON (registered trademark) NTF1122" (average pore size: 0.2 $\mu$m, porosity: 75 %, thickness: 85 $\mu$m) which is available from Nitto Denko Corporation or a corresponding material thereto.

In performing the copolymerization reaction of the monomer mixture, a chain transfer agent (which may also be grasped as a molecular weight modifier or a polymerization degree modifier) can be used, as the need arises. As the chain transfer agent, one kind or two or more kinds of conventionally known or used chain transfer agents can be used. A use amount of the chain transfer agent may be a usual use amount, and it can be, for example, selected within the range of from about 0.001 to 0.5 parts by mass based on 100 parts by mass of the whole of monomer components.

The pressure-sensitive adhesive composition disclosed herein may contain, as optional components, various additives which are general in the field of pressure-sensitive adhesive compositions. Examples of such optional component include tackifiers (e.g., rosin resins, petroleum resins, terpene resins, phenol resins, and ketone resins), plasticizers, softener, fillers, colorants (e.g., pigments and dyes), antioxidants, leveling agents, stabilizers, and antiseptics. As to such additives, conventionally known materials can be used by ordinary methods.

In one preferred embodiment, the pressure-sensitive adhesive composition contains substantially no tackifier. In the pressure-sensitive composition disclosed herein, even when a tackifier is not used, sufficient adhesiveness and repulsion resistance to various members are obtained by using the monomer m2,. In this way, what the use of a tackifier can be omitted is advantageous from the viewpoint of enhancing the heat resistance. Also, in view of the fact that the use of a solvent for dissolving the tackifier can be omitted, this is especially advantageous in the case of the type (solventless type) coatable without diluting with a solvent.

It is preferable that the pressure-sensitive adhesive composition disclosed herein is constituted in such a manner that a final copolymer (corresponding to the acrylic copolymer included in the completely polymerized material) of the monomer mixture which is contained in the pressure-sensitive adhesive formed by a curing treatment (e.g., drying, crosslinking, and polymerization), as the need arises, accounts for about 50 % by mass or more, more preferably about 70 % by mass or more, and still more preferably 90 % by mass or more. Such pressure-sensitive adhesive composition may be a composition capable of forming a pressure-sensitive adhesive with more excellent adhesive performances.

The pressure-sensitive adhesive sheet according to the present invention is provided with a pressure-sensitive adhesive layer formed by using any of the pressure-sensitive adhesive compositions disclosed herein. The pressure-sensitive adhesive sheet according to the present invention may be a pressure-sensitive adhesive sheet (so-called substrate-attached pressure-sensitive adhesive sheet) in a mode in which such a pressure-sensitive adhesive layer is provided on one surface or both surfaces of a sheet form base material (support) in a fixed manner (without intending to separate the pressure-sensitive adhesive layer from the base material), or a pressure-sensitive adhesive sheet (so-called substrate-less pressure-sensitive adhesive sheet) in a mode in which the pressure-sensitive adhesive layer is provided on a releasable base material such as a release liner (e.g., release paper, a resin sheet having a surface subjected to a release treatment) (a mode in which a base material for supporting the pressure-sensitive adhesive layer is removed as a release liner at the time of attachment). A concept of the pressure-sensitive adhesive sheet referred to herein may include those called a pressure-sensitive adhesive tape, a pressure-sensitive adhesive label, a pressure-sensitive adhesive film, or the like. Incidentally, the pressure-sensitive adhesive layer is not limited to one continuously formed, but it may be a pressure-sensitive adhesive layer formed into a regular or random pattern in, for example, a spot-like form, a stripe-shaped form, or other form.

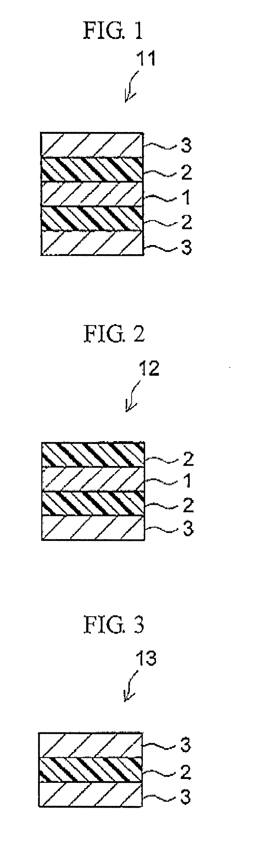

The pressure-sensitive adhesive sheet disclosed herein may, for example, have a cross-sectional structure schematically shown in any of FIG. 1 to FIG. 6. Among them, each of FIG. 1 and FIG. 2 shows a configuration example of a double-sided adhesive substrate-attached pressure-sensitive adhesive sheet (substrate-attached double-coated pressure-sensitive adhesive sheet). A pressure-sensitive adhesive sheet 11 shown in FIG. 1 has a configuration in which a pressure-sensitive adhesive layer 2 is provided on the both surfaces of a base material 1, and each of the pressure-sensitive adhesive layers 2 is protected by a release liner 3 in which at least the pressure-sensitive adhesive layer side thereof is a release surface. A pressure-sensitive adhesive sheet 12 shown in FIG 2 has a configuration in which the pressure-sensitive adhesive layer 2 is provided on the both surfaces of the base material 1, and one of those pressure-sensitive adhesive layers is protected by the release liner 3 in which the both surfaces thereof are a release surface. The pressure-sensitive adhesive sheet 12 of this kind can have a constitution where the other pressure-sensitive adhesive layer is also protected with the release liner 3 by winding up the pressure-sensitive adhesive sheet 12 in such a matter that the other pressure-sensitive adhesive layer is brought into contact with the rear surface of the release liner 3.

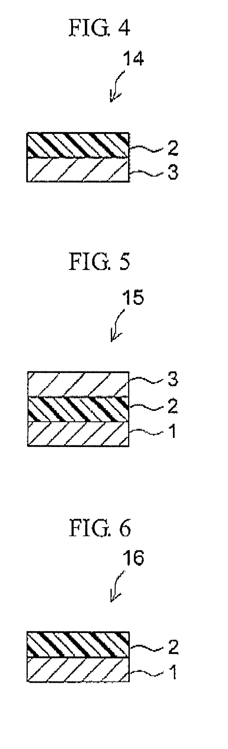

Each of FIG. 3 and FIG. 4 shows a configuration example of a substrate-less pressure-sensitive adhesive sheet. A pressure-sensitive adhesive sheet 13 shown in FIG 3 has a configuration in which each surface of the substrate-less pressure-sensitive adhesive layer 2 is protected by the release liner 3 in which at least the pressure-sensitive adhesive layer side thereof is a release surface. A pressure-sensitive adhesive sheet 14 shown in FIG. 4 has a configuration in which one surface of the substrate-less pressure-sensitive adhesive layer 2 is protected by the release liner 3 in which the both surfaces thereof are a release surface; and can have a constitution where the other surface is also protected by the release liner 3 by winding this up, to bring the other surface of the pressure-sensitive adhesive layer 2 into contact with the release liner 3.

Each of FIG. 5 and FIG. 6 shows a configuration example of a single-sided adhesive substrate-attached pressure-sensitive adhesive sheet. A pressure-sensitive adhesive sheet 15 shown in FIG. 5 has a configuration in which the pressure-sensitive adhesive layer 2 is provided on one surface of the base material 1, and the surface (adhesive surface) of the pressure-sensitive adhesive layer 2 is protected by the release liner 3 in which at least the pressure-sensitive adhesive layer side thereof is a release surface. A pressure-sensitive adhesive sheet 16 shown in FIG. 6 has a configuration in which the pressure-sensitive adhesive layer 2 is provided on one surface of the base material 1. The other surface af the base material 1 is a release surface, and the pressure-sensitive adhesive sheet 16 is constituted in such a manner that when the pressure-sensitive adhesive sheet 16 is wound up, the pressure-sensitive adhesive layer 2 is brought into contact with the other surface so that the surface (adhesive surface) of the pressure-sensitive adhesive layer is protected by the other surface of the base material 1.

As the base material, for example, plastic films such as a polypropylene film, an ethylene-propylene copolymer film, a polyester film, and a polyvinyl chloride film; foam base materials such as a polyurethane foam and a polyethylene foam; papers such as craft paper, crepe paper and Japanese paper; cloths such as a cotton cloth and a staple fiber cloth; nonwoven fabrics such as a polyester nonwoven fabric and a vinylon nonwoven fabric; and metal foils such as an aluminum foil and a copper foil can be properly selected and used depending upon an application of the pressure-sensitive adhesive sheet. As the plastic film, any of non-stretched films and stretched (uniaxially stretched or biaxially stretched) films can be used. Also, in the base material, the surface on which the pressure-sensitive adhesive layer is provided may be subjected to a surface treatment such as coating with an undercoating agent, or a corona discharge treatment. Though a thickness of the base material can be properly selected depending upon the purpose, in general, it is from about 10 $\mu$m to 500 $\mu$m (typically from 10 $\mu$m to 200 $\mu$m).

The pressure-sensitive adhesive layer may be a cured layer of any of the pressure-sensitive adhesive compositions disclosed herein. That is, the pressure-sensitive adhesive layer may be preferably formed by applying (typically coating) the pressure-sensitive adhesive composition onto an appropriate base material (which may also be a release liner) and then properly subjecting it to a curing treatment. In the case of performing two or more kinds of curing treatments (e.g., drying, crosslinking and polymerization), these treatments can be performed simultaneously or in multiple stages. In the pressure-sensitive adhesive composition using a partially polymerized material, typically, a final copolymerization reaction is performed as the above curing treatment (the partially polymerized material is further subjected to a copolymerization reaction to form a completely polymerized material). For example, in the case of a photocurable pressure-sensitive adhesive composition, irradiation with light is performed. A curing treatment such as crosslinking or drying may be performed, as the need arises. For example, in the case where the photocurable pressure-sensitive adhesive composition is required to be dried, it may be photocured after drying. In the pressure-sensitive adhesive composition using a completely polymerized material, typically, a treatment such as drying (heat drying) or crosslinking is performed as the curing treatment, as the need arises.

Coating of the pressure-sensitive adhesive composition can be performed using, for example, a customary coater such as a gravure roll coater, a reverse roll coater, a kiss roll coater, a dip roll coater, a bar coater, a knife coater, and a spray coater. From the viewpoints of acceleration of the crosslinking reaction, an enhancement of the production efficiency, and the like, it is preferable to perform drying of the pressure-sensitive adhesive composition under heating. Though a drying temperature which can be adopted varies depending upon the kind of the support onto which the composition is coated, it is, for example, from about 40 to 150°C.

Incidentally, in the case of a substrate-attached pressure-sensitive adhesive sheet, the pressure-sensitive adhesive layer may be formed by directly applying the pressure-sensitive adhesive composition onto the base material, or the pressure-sensitive adhesive layer formed on the release liner may be transferred onto the base material.

Though a thickness of the pressure-sensitive adhesive layer is not particularly limited, in general, excellent pressure-sensitive adhesive performances (e.g., adhesive strength) may be realized by regulating it to about 10 μm or more, preferably about 20 μm or more, and more preferably about 30 μm or more. It is suitable that the thickness of the pressure-sensitive adhesive layer is, for example, from about 10 to 250 μm.

The pressure-sensitive adhesive sheet disclosed herein has a peeling strength at room temperature (23°C), as measured in an adhesive force test described in the Examples, of 10 N/25 mm or more against all of a polypropylene (PP) plate, an acrylic plate and an acrylonitrile-butadiene-styrene copolymer resin (ABS) plate, and therefore may exhibit excellent adhesiveness to members having surface polarity of every kind. Furthermore the pressure-sensitive adhesive sheet disclosed herein may simultaneously realize excellent repulsion resistance (curved surface followability) such that a lifting distance from the PP plate, as measured in a repulsion resistance test described in the Examples, is not more than 5 mm in a room-temperature environment; and that a lifting distance from the acrylic plate is not more than 5 mm in all of a room-temperature environment and a moist heat environment. Such pressure-sensitive adhesive sheet is suitable for an application of joining (fixing) various members to coating films which is composed mainly of a resin of every kind such as PP, ABS, SBS (styrene-butadiene-styrene block copolymer), PC (polycarbonate) and covering surfaces of auto mobiles, building materials, household appliances, etc.

In view of the fact that the pressure-sensitive adhesive formed from the pressure-sensitive adhesive composition disclosed herein exhibits high adhesiveness to a low-polarity surface and also has moist heat resistance, it is suitable for an application of attaching an optical member whose base surface (joining surface) has low polarity to an adherend (e.g., a liquid crystal cell). In consequence, the technologies disclosed herein include a laminate in which such pressure-sensitive adhesive layer is provided on an optical member layer. Typically, this laminate takes an embodiment in which the pressure-sensitive adhesive layer on the optical member is protected by a release liner. Such a pressure-sensitive adhesive type optical member can be easily attached onto, for example, a surface of a liquid crystal cell.

The optical member is not particularly limited, and it may be a polarizing film, a retardation film, or the like. Such optical member has a low-polarity surface at least on the side at which the pressure-sensitive adhesive layer is laminated. That is, at least the layer with which the joining surface is provided is formed of a low-polarity material. The low-polarity material may be a resin of every kind, such as PP, PC, norbornene, polyethylene, polystyrene, AES (acrylonitrile-ethylene-styrene copolymer), and ABS. The optical member may be of a single-layered structure composed of the same material or may be of a multi-layered structure composed of a plurality of materials, As to a method for forming the pressure-sensitive adhesive layer on the optical member, similar to the case of forming the pressure-sensitive adhesive layer on the base material, a directly applying method or a transferring method can be properly adopted. Typically, the pressure-sensitive adhesive layer formed on a release liner is transferred onto the base surface of the optical member.

EXAMPLES

Some Examples regarding the present invention are hereunder described, but it is not intended that the present invention is limited to these Examples. Incidentally, in the following, all "parts" and "%" are on a mass basis unless otherwise indicated.

<Example 1>

To 100 parts of a monomer mixture consisting of 80 parts of 2EHA and 20 parts of NVC were added 0.05 parts of 2,2-dimethoxy-1,2-diphenylethan-1-one (a trade name "IRGACURE 651", manufactured by Ciba Japan K.K.) and 0.05 parts of 1-hydroxycyclohexyl-phenyl ketone (a trade name "IRGACURE 184", manufactured by Ciba Japan K.K.) as photopolymerization initiators, This mixture was stirred in a nitrogen gas atmosphere, thereby thoroughly removing dissolved oxygen, and thereafter, the mixture was irradiated with ultraviolet rays to obtain a partially polymerized material of the monomer mixture (conversion: 10.2 %).

To this partially polymerized material, 1,6-hexanediol diacrylate (HDDA) was added as a crosslinking agent in an amount of 0.02 parts based on 100 parts of the used monomer mixture. This additive-incorporated partially polymerized material was coated on a first release liner, and a second release liner was further laminated on this coated layer. The resulting coated layer was irradiated with ultraviolet rays under a condition at an illuminance of about 5 mW/cm$^2$ in a quantity of light of about 720 mJ/cm$^2$ to form a pressure-sensitive adhesive layer having a thickness of 50 μm, thereby

obtaining a double-coated pressure-sensitive adhesive sheet. As all of the above release liners, a 38 μm-thick polyethylene terephthalate (PET) film in which the surface to be brought into contact with the pressure-sensitive adhesive layer had been subjected to a release treatment with a silicone release agent was used. A gel fraction of the pressure-sensitive adhesive after curing was 55.2 %.

<Example 2>

A double-coated pressure-sensitive adhesive sheet was obtained in the same manner as that in Example 1, except for changing the composition of the monomer mixture to a composition consisting of 70 parts of 2EHA and 30 parts of NVC. A conversion of the partially polymerized material was 11.8 %. A gel fraction of the pressure-sensitive adhesive after curing was 69.0 %.

<Example 3>

A partially polymerized material having a conversion of 8.9 % was obtained in the same manner as that in Example 1, except for changing the composition of the monomer mixture to a composition consisting of 80 parts of 2EHA, 16 parts of NVC, and 4 parts of NVP. A double-coated pressure-sensitive adhesive sheet was obtained in the same manner as that in Example 1 except for adding 0.018 parts of HDDA and further adding 0.05 parts of each of trade names "IRGACURE 651" and "IRGACURE 1.84" as photopolymerization initiators (supplementary) to this partially polymerized material. A gel fraction of the pressure-sensitive adhesive after curing was 50.0 %.

<Example 4>

A double-coated pressure-sensitive adhesive sheet was obtained in the same manner as that in Example 1, except for changing the composition of the monomer mixture to a composition consisting of 80 parts of BA and 20 parts ofNVC. A conversion of the partially polymerized material was about 10 %. A gel fraction of the pressure-sensitive adhesive after curing was 40.7 %.

<Examples 5>

From a monomer mixture of 80 parts of 2EHA and 20 parts of NVC, a partially polymerized material P1 having a conversion of about 10 % was obtained in the same manner as that in Example 1. From a monomer mixture of 80 parts of BA and 20 parts of NVC, a partially polymerized material P2 having a conversion of about 10 % was similarly obtained. To a mixture of 60 parts of P1 and 40 parts of P2 (monomer composition: 2EHA/BA/NVC = 48/32/20) was added 0.02 parts of HDDA, and a double-coated pressure-sensitive adhesive sheet was obtained in the same manner as that in Example 1. A gel fraction of the pressure-sensitive adhesive after curing was 47.4 %.

<Example 6>

From a monomer mixture of 80 parts of 2EHA and 20 parts of NVP, a partially polymerized material P3 having a conversion of about 13,5 % was obtained in the same manner as that in Example I. To a mixture of 50 parts of P1 (Example 5) and 50 parts of P3 (monomer composition); 2EHA/NVC/NVP = 80/10/10) was added 0.02 parts of HDDA was added, and a double-coated pressure-sensitive adhesive sheet was obtained in the same manner as that in Example 1. A gel fraction of the pressure-sensitive adhesive after curing was 70.5 %.

<Example 7>

A double-coated pressure-sensitive adhesive sheet was obtained in the same manner as that in Example 1, except for changing the composition of the monomer mixture to a composition consisting of 90 parts of 2EHA and 10 parts of NVC and changing the amount of HDDA to 0.045 parts. A conversion of the partially polymerized material was about 10 %. A gel fraction of the pressure-sensitive adhesive after curing was 63.1 %.

<Example 8>

A double-coated pressure-sensitive adhesive sheet was obtained in the same manner as that in Example 1, except for changing the composition of the monomer mixture to a composition consisting of 80 parts of 2EHA and 20 parts of NVP. A conversion of the partially polymerized material was 13.5 %. A gel fraction of the pressure-sensitive adhesive after curing was 57.7 %.

<Example 9>

A double-coated pressure-sensitive adhesive sheet was obtained in the same manner as that in Example 3, except for changing the composition of the monomer mixture to a composition consisting of 70 parts of 2EHA and 30 parts of DEAA and changing the amount of HDDA to 0.08 parts. A conversion of the partially polymerized material was 11.2 %. A gel fraction of the pressure-sensitive adhesive after curing was 49.0 %.

<Example 10>

A double-coated pressure-sensitive adhesive sheet was obtained in the same manner as that in Example 1, except for changing the composition of the monomer mixture to a composition consisting of 90 parts of 2EHA and 10 parts of AA and changing the amount of HDDA to 0.04 parts. A conversion of the partially polymerized material was about 9.0 %. A gel fraction of the pressure-sensitive adhesive after curing was 69.7 %.

[Gel fraction of pressure-sensitive adhesive]

The gel fraction of the pressure-sensitive adhesive of each of the Example was measured by the above-mentioned method. As the porous PTFE film (mass $W_2$), a trade name "NITOFURON (registered trademark) NTF1122" (manufactured by Nitto Denko Corporation, thickness: 85 $\mu$m) of 100 mm x 100 mm was used. As the kite string (mass $W_3$), one having a thickness of 1.5 mm and a length of about 100 mm was used. For the pressure-sensitive adhesive sample (mass $W_1$), one obtained by cutting each pressure-sensitive adhesive sheet into a size of 20 cm$^2$ and removing the both release liners was used.

A monomer composition, fg, and Tg of each of the Examples are shown in Table 1. Also, results of the following evaluation tests which were performed with respect to the pressure-sensitive adhesive sheets of Examples 1 to 10 are shown in Table 2.

[Adhesive force]

A first release liner was removed from each of the pressure-sensitive adhesive sheets to expose a first pressure-sensitive adhesive surface, and onto which a PET film (not subjected to a release treatment) having a thickness of 50 $\mu$m was attached. The resultant was cut into a width of 25 mm to prepare a specimen. A second release liner was removed from this specimen, followed by press bonding to an adherend by a method of making a roller of 5 kg one revolution. As the adherend, a clean PP plate which had been cleaned by rubbing with an isopropyl alcohol-soaked clean waste cloth 10 reciprocation, After maintaining this at 40°C for 2 days and then at room temperature (23°C) for 30 minutes, a peeling strength (N/25 mm) against the PP plate was measured using a tension tester under a condition of a tension rate of 3 00 mm/min and a peeling angle of 180°. A peeling strength against an acrylic plate was measured in the same manner as that in the peeling strength against PP by using an acrylic plate which had been cleaned according to the above procedures as an adherend. A peeling strength against an ABS plate was measured in the same manner. On the basis of results thereof, the case where the peeling strength against all of the PP plate, the acrylic plate, and the ABS plate was 10 N/25 mm or more was evaluated as "A", and the case where the peeling strength against at least any one of them was a value less than 10 N/25 mm was evaluated as "B".

[Repulsion resistance]

[Room-temperature environment]

Each of the double-coated pressure-sensitive adhesive sheets was cut into a size of 10 mm in width and 90 mm in length and a first release liner was removed therefrom to expose a first pressure-sensitive adhesive surface, and onto which an aluminum piece (thickness: 0.5 mm) which had been cut into the same size was attached to prepare a specimen. This specimen was maintained in an environment at 23°C and 50 % RH for one day and then curved at a curvature of R (curvature radius) of 50 mm along the longitudinal direction in such a manner that the aluminum piece side was located inside. A second release liner was removed from this specimen to expose a second pressure-sensitive adhesive surface, and on which a PP plate (200 mm x 300 mm, thickness: 2 mm) was press bonded by using a laminator. The resultant was maintained in an environment at 23°C and 50 % RH for 2 hours, and a distant (mm) at which each end part of the specimen lifted from the PP plate surface was measured. The PP plate was replaced by an acrylic plate, and a distance (mm) at which each end part of the specimen lifted from the acrylic plate surface was measured in the same manner as described above. On the basis of results thereof, the repulsion resistance of each of the pressure-sensitive adhesive sheets in the room-temperature environment was evaluated according to the following two grades.

A: An average of the lifting distance on the both ends was not more than 5 mm against each of PP and acrylic.
B: An average of the lifting distance on the both ends was larger than 5 mm against at least any one of PP plate and acrylic.

[Moist heat environment]

A specimen which was prepared in the same manner as that in the measurement in a room-temperature environment was curved at a curvature of R160 mm along the longitudinal direction in such a manner that the aluminum piece side was located inside, followed by press bonding an acrylic plate. The resultant was held in an environment at 60°C and 95 % RH for 7 hours, and a distant (mm) at which each end part of the specimen lifted from the acrylic plate surface was measured. On the basis of results thereof, the repulsion resistance of each of the pressure-sensitive adhesive sheets in the moist heat environment was evaluated according to the following two grades.

A: An average of the lifting distance from the acrylic plate on the both ends was not more than 5 mm.
B: An average of the lifting distance from the acrylic plate on the both ends was larger than 5 mm.

Table 1

| Example | Monomer composition | fg(%) | Tg(°C) |
|---|---|---|---|
| 1 | 2EHA/NVC = 80/20 | 55.2 | -45 |
| 2 | 2EHA/NVC= 70/30 | 69.0 | -30 |
| 3 | 2EHA/NVC/NVP = 80/16/4 | 50.0 | -47 |
| 4 | BA/NVC = 80/20 | 40.7 | -29 |
| 5 | 2EHA/BA/NVC - 48/32/20 | 47.4 | -39 |
| 6 | 2EHA/NVC/NVP = 80/10/10 | 70.5 | -49 |
| 7 | 2EHA/NVC= 90/10 | 63.1 | -58 |
| 8 | 2EHA/NVP = 80/20 | 57.7 | -53 |
| 9 | 2EHA/DEAA = 70/30 | 49.0 | -40 |
| 10 | 2EHA/AA = 90/10 | 69.7 | -60 |

Table 2

| Example | Adhesiveness | | | | Repulsion resistance | | | |
|---|---|---|---|---|---|---|---|---|
| | Peeling strength (N/25 mm) | | | Evaluation | Room-temperature environment | | | Moist heat environment |
| | | | | | Lifting distance (mm) | | Overall evaluation | Evaluation against acrylic |
| | PP | Acrylic | ABS | | Against PP | Against acrylic, | | |
| 1 | 13.9 | 19.0 | 21.2 | A | 3.4 | 2.2 | A | A |
| 2 | 15.7 | 22.7 | 29.6 | A | 4.2 | 0.0 | A | A |
| 3 | 13.9 | 20.1 | 22.8 | A | 4.2 | 1.9 | A | A |
| 4 | 10.2 | 20.0 | 22.6 | A | 1.1 | 0.1 | A | A |
| 5 | 12.8 | 20.0 | 20.3 | A | 1.1 | 0.2 | A | A |
| 6 | 12.9 | 19.9 | 20.0 | A | 7.7 | 0.9 | B | B |
| 7 | 10.3 | 16.5 | 14.6 | A | 11.2 | 3.1 | B | B |

# EP 2 522 706 A1

(continued)

| Example | Adhesiveness | | | | Repulsion resistance | | | |
| --- | --- | --- | --- | --- | --- | --- | --- | --- |
| | Peeling strength (N/25 mm) | | | Evaluation | Room-temperature environment | | | Moist heat environment |
| | | | | | Lifting distance (mm) | | Overall evaluation | Evaluation against acrylic |
| | PP | Acrylic | ABS | | Against PP | Against acrylic, | | |
| 8 | 13.3 | 20.7 | 21.8 | A | 11.4 | 0.1 | B | B |
| 9 | 12.7 | 23.2 | 21.7 | A | 12.5 | 11.5 | B | B |
| 10 | 5.0 | 23.4 | 17.9 | B | 3.3 | 0.0 | A | B |

As shown in Tables 1 and 2, the pressure-sensitive adhesives of Examples 1 to 5 using a monomer mixture containing 95 % by mass or more in total of the monomer m1 and the monomer m2 (NVC) and from 12 to 40 % by mass of NVC exhibited excellent adhesiveness as 10 N/25 mm or more to all of various resin materials ofPP, acrylic, and ABS. Furthermore, the pressure-sensitive adhesives of Examples 1 to 5 exhibited excellent repulsion resistance in each of the room-temperature environment and the moist heat environment. On the other hand, in all of the pressure-sensitive adhesives of Examples 6 and 7 using less than 12 % by mass of NVC and the pressure-sensitive adhesives of Examples 8 and 9 using other N-containing monomer in place ofNVC of Examples 1 and 2, though adhesiveness to all of various resin materials of PP, acrylic, and ABS was sufficient, repulsion resistance was apt to be insufficient even in the room-temperature environment. Also, in the pressure-sensitive adhesive of Example 10 using acrylic acid in addition to the monomer m1, adhesiveness to the PP plate having low polarity was low, and repulsion resistance in the moist heat environment was also insufficient.

While the present invention has been described in detail with reference to specific embodiments thereof, these are merely exemplifications and do not limit the scope of the claims. The technologies described in the scope of the claims include various modifications and changes of the specific embodiments as exemplified above,

While the present invention has been described in detail with reference to specific embodiments, it will be apparent to one skilled in the art that various changes and modifications can be made therein without departing from the specific and scope thereof. The present application is based on a Japanese patent application filed on January 7,2010 (Japanese Patent Application No. 2010-002235), and contents thereof are incorporated herein by reference.

## INDUSTRIAL APPLICABILITY

Since the pressure-sensitive adhesive composition of the present invention is capable of forming a pressure-sensitive adhesive layer, which has excellent adhesiveness to an adherend having surface polarity of every kind and can exhibit excellent repulsion resistance, a pressure-sensitive adhesive sheet provided with such pressure-sensitive adhesive layer can be suitably used for an application of fixing an optical member to a prescribed site,

## EXPLANATIONS OF LETTERS OR NUMERALS

1: Base material
2: Pressure-sensitive adhesive layer
3: Release liner
11, 12, 13, 14, 15, 16: Pressure-sensitive adhesive sheet

## Claims

1.  A pressure-sensitive adhesive composition that is an acrylic pressure-sensitive adhesive composition comprising a copolymerization reaction product of a monomer mixture satisfying all of the following requirements of:

    containing, as a monomer m1, an alkyl (meth)acrylate represented by the following formula (I):

$$CH_2=C(R^1)COOR^2 \qquad (I)$$

wherein $R^1$ is a hydrogen atom or a methyl group; and $R^2$ is an alkyl group having a carbon number of from 4 to 20; containing, as a monomer m2, N-vinylcaprolactam;

having a total sum amount of the monomer m1 and the monomer m2 being 95% by mass or more of the whole of monomer components; and

having an amount of the monomer m2 being from 12 to 40% by mass of the whole of monomer components.

2. The pressure-sensitive adhesive composition according to claim 1, further satisfying all of the following requirements of:

the copolymerization reaction product being a partially polymerized material;
containing a photopolymerization initiator; and
containing substantially no solvent.

3. The pressure-sensitive adhesive composition according to claim 1 or 2, further containing a crosslinking agent.

4. The pressure-sensitive adhesive composition according to any one of claims 1 to 3, wherein the monomer mixture has a monomer composition such that a glass transition temperature Tg of a copolymer of the mixture is -10°C or lower.

5. The pressure-sensitive adhesive composition according to any one of claims 1 to 4, wherein the monomer components further contain, as a monomer m3, a nitrogen-containing monomer other than N-vinylcaprolactam.

6. A pressure-sensitive adhesive sheet comprising, as a pressure-sensitive adhesive layer, a cured layer of the pressure-sensitive adhesive composition according to any one of claims 1 to 5.

7. A laminate comprising an optical member and a pressure-sensitive adhesive layer laminated thereon, wherein the optical member has a low-polarity surface on the side coming into contact with the pressure-sensitive adhesive layer; and
the pressure-sensitive adhesive layer is a cured layer of the pressure-sensitive adhesive composition according to any one of claims 1 to 6.

8. A method for manufacturing a pressure-sensitive adhesive sheet, comprising:

(A) subjecting a monomer mixture to a copolymerization reaction to prepare a pressure-sensitive adhesive composition, wherein the monomer mixture satisfies all of the following requirements of:

containing, as a monomer m1, an alkyl (meth)acrylate represented by the following formula (I):

$$CH_2=C(R^1)COOR^2 \qquad (I)$$

wherein $R^1$ is a hydrogen atom or a methyl group; and $R^2$ is an alkyl group having a carbon number of from 4 to 20;
containing, as a monomer m2, N-vinylcaprolactam;
having a total sum amount of the monomer m1 and the monomer m2 being 95% by mass or more of the whole of monomer components; and
having an amount of the monomer m2 being from 12 to 40% by mass of the whole of monomer components;

(B) coating the pressure-sensitive adhesive composition on a base material; and
(C) curing the coated composition to form a pressure-sensitive adhesive layer.

FIG. 1

11

FIG. 2

12

FIG. 3

13

FIG. 4

14

2
3

FIG. 5

15

3
2
1

FIG. 6

16

2
1

# EP 2 522 706 A1

## INTERNATIONAL SEARCH REPORT

| | International application No. |
|---|---|
| | PCT/JP2011/050132 |

### A. CLASSIFICATION OF SUBJECT MATTER

*C09J133/06*(2006.01)i, *C09J4/00*(2006.01)i, *C09J4/02*(2006.01)i, *C09J7/00*(2006.01)i, *C09J11/06*(2006.01)i, *C09J139/00*(2006.01)i

According to International Patent Classification (IPC) or to both national classification and IPC

### B. FIELDS SEARCHED

Minimum documentation searched (classification system followed by classification symbols)
C09J1/00-201/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2009-544815 A (3M INNOVATIVE PROPERTIES CO.),<br>17 December 2009 (17.12.2009),<br>claims; examples<br>& WO 2008/014169 A1    & TW 200813185 A<br>& EP 2044163 A1    & KR 2009-031923 A<br>& CN 101495587 A    & US 2009/311502 A1 | 1-6,8<br>7 |
| X<br>Y | JP 5-105857 A (Sekisui Chemical Co., Ltd.),<br>27 April 1993 (27.04.1993),<br>claims; paragraphs [0038], [0039], [0087]<br>(Family: none) | 1,3-6,8<br>2,7 |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 04 March, 2011 (04.03.11) | 22 March, 2011 (22.03.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/050132

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 63-308079 A (MINNESOTA MINING & MFG CO.),<br>15 December 1988 (15.12.1988),<br>claims; examples 1, 21<br>& US 4726982 A          & EP 286420 A1<br>& DE 3878289 A          & CA 1328138 A<br>& KR 9605179 | 1,3-6,8<br>2,7 |
| X<br>Y | JP 61-073780 A (JOHNSON & JOHNSON PRODUCTS<br>INC.),<br>15 April 1986 (15.04.1986),<br>claims; examples 1 to 10; page 3, upper right<br>column<br>& EP 175562 A1          & BR 8504496 A<br>& ZA 8507099 A          & US 4701509 A<br>& CN 8507065 A          & CA 1249694 A | 1,3-6,8<br>2,7 |
| Y | JP 2005-179481 A (Nitto Denko Corp.),<br>07 July 2005 (07.07.2005),<br>claims; examples; paragraph [0045]<br>(Family: none) | 2,7 |
| A | JP 2-502653 A (AVERY INT CORP.),<br>23 August 1990 (23.08.1990),<br>& US 4812541 A          & WO 1989/05829 A1<br>& AU 8929271 A          & ES 2009473 A<br>& EP 354230 A1          & DE 3869409 A<br>& CA 1324458 A          & KR 9708717 B | 1-8 |
| A | JP 5-105856 A (Sekisui Chemical Co., Ltd.),<br>27 April 1993 (27.04.1993),<br>(Family: none) | 1-8 |

Form PCT/ISA/210 (continuation of second sheet) (July 2009)

**REFERENCES CITED IN THE DESCRIPTION**

**Patent documents cited in the description**

- JP 5105856 A
- JP 5263055 A
- JP 6166858 A
- JP 6172729 A
- JP 6200225 A
- JP 6001954 A
- JP 6166857 A
- JP 2000096012 A
- JP 2010002235 A

**Non-patent literature cited in the description**

- Nenchaku Gijutsu Handobukku. The Nikkan Kogyo Shimbun, Ltd,
- Polymer Handbook. Wiley-Interscience